# EUROPEAN PATENT APPLICATION

(11) **EP 3 725 918 A1**
(43) Date of publication of application: **21.10.2020**
(21) Application number: 19908084.7
(22) Date of filing: 10.12.2019
(51) Int. Cl.: C25B 9/00, C25B 1/02, C25B 11/03, C25B 11/04, C25B 11/12

(54) **ELECTROCHEMICAL HYDROGEN PUMP**

(30) Priority: 24.01.2019 JP 2019010115; 08.11.2019 JP 2019202964
(71) Applicant: Panasonic Intellectual Property Management Co., Ltd., Osaka-shi, Osaka 540-6207 (JP)
(72) Inventor: NAKAUE Takayuki, Osaka-shi, Osaka 540-6207 (JP); UKAI Kunihiro, Osaka-shi, Osaka 540-6207 (JP); KITA Hiromi, Osaka-shi, Osaka 540-6207 (JP)
(74) Representative: Grünecker Patent- und Rechtsanwälte PartG mbB
(86) International application number: PCT/JP2019/048205
(87) International publication number: WO 2020/153022

(57) **Abstract**

An electrochemical hydrogen pump includes an electrolyte membrane, an anode catalyst layer in contact with one primary surface of the electrolyte membrane, a cathode catalyst layer in contact with the other primary surface of the electrolyte membrane, an anode gas diffusion layer in contact with the anode catalyst layer, a cathode gas diffusion layer in contact with the cathode catalyst layer, and a voltage applicator that applies a voltage between the anode catalyst layer and the cathode catalyst layer. Application of the voltage by the voltage applicator causes hydrogen in a hydrogen-containing gas supplied to above the anode catalyst layer to move above the cathode catalyst layer and to be pressurized. The anode gas diffusion layer includes a porous carbon sheet that has a smaller porosity in a first surface layer, which is on the anode catalyst layer side, than in the inside layer deeper than the first surface layer.

## Description

### Technical Field

The present disclosure relates to an electrochemical hydrogen pump.

### Background Art

Hydrogen has been attracting attention in recent years as a clean alternative energy source to replace fossil fuels against a background of environmental problems, such as global warming, and energy issues, such as the depletion of petroleum resources. When burnt, basically, hydrogen only releases water, with zero emissions of carbon dioxide, which causes global warming, and almost zero emissions of substances like nitrogen oxides, and this is why it is hoped that hydrogen will serve as clean energy. An example of a device that efficiently uses hydrogen as a fuel is fuel cells. The development and popularization of fuel cells are ongoing for automotive power supply and household power generation applications.

In the forthcoming hydrogen society, technologies will need to be developed to enable not only the production but also high-density storage and small-volume, low-cost transport or use of hydrogen. In particular, further popularization of fuel cells, which provide distributed energy sources, requires preparing infrastructure for the supply of hydrogen. In addition, attempts at producing, purifying, and densely storing high-purity hydrogen are ongoing to ensure stable supply of hydrogen.

For example, PTL 1 discloses an anode power feeder whose base, made of sintered titanium powder, has been pressed to have a lower porosity at its surface. This helps improve the density and smoothness of the surface, and damage to the electrolyte membrane is reduced.

To take another example, PTL 2 discloses a porous power feeder composed of sintered metal powder and an MPL (Micro Porous layer) of carbon and resin thereon. This improves the contact between the power feeder and the electrolyte membrane and also helps give the power feeder an optimal porosity. Damage to the electrolyte membrane from contact with the power feeder is also reduced.

### Citation List

### Patent Literature

PTL 1: Japanese Unexamined Patent Application Publication No. 2012-180553
PTL 2: Japanese Unexamined Patent Application Publication (Translation of PCT Application) No. 2015-526840

### Summary of Invention

An object of an aspect of the present disclosure is to provide, for example, an electrochemical hydrogen pump that can be less prone to water flooding at its anode gas diffusion layer than in the related art.

To achieve this object, an electrochemical hydrogen pump in an aspect of the present disclosure is a device that includes: an electrolyte membrane; an anode catalyst layer in contact with one primary surface of the electrolyte membrane; a cathode catalyst layer in contact with the other primary surface of the electrolyte membrane; an anode gas diffusion layer in contact with the anode catalyst layer; a cathode gas diffusion layer in contact with the cathode catalyst layer; and a voltage applicator that applies a voltage between the anode catalyst layer and the cathode catalyst layer. The electrochemical hydrogen pump is configured to, through application of the voltage by the voltage applicator, cause hydrogen in a hydrogen-containing gas supplied to above the anode catalyst layer to move above the cathode catalyst layer and to be pressurized. The anode gas diffusion layer includes a porous carbon sheet that has a smaller porosity in a first surface layer, which is on an anode catalyst layer side, than in an inside layer deeper than the first surface layer.

The electrochemical hydrogen pump in an aspect of the present disclosure can advantageously be less prone to water flooding at its anode gas diffusion layer than in the related art.

### Brief Description of Drawings

[Fig. 1A] Fig. 1A is a diagram illustrating an example of an electrochemical hydrogen pump in Embodiment 1.
[Fig. 1B] Fig. 1B is an enlarged view of portion B of the electrochemical hydrogen pump in Fig. 1A.
[Fig. 2A] Fig. 2A is a diagram illustrating an example of an electrochemical hydrogen pump in Embodiment 1.
[Fig. 2B] Fig. 2B is an enlarged view of portion B of the electrochemical hydrogen pump in Fig. 2A.
[Fig. 3] Fig. 3 is a diagram illustrating an example of a porous carbon sheet in an electrochemical hydrogen pump in Embodiment 1.
[Fig. 4] Fig. 4 is a diagram illustrating an example of a porous carbon sheet in an electrochemical hydrogen pump in Embodiment 2.
[Fig. 5] Fig. 5 is a diagram illustrating an example of measured porosities of a porous carbon sheet in an electrochemical hydrogen pump.
[Fig. 6A] Fig. 6A is a diagram illustrating an example of a porous carbon sheet in an electrochemical hydrogen pump in Embodiment 3.
[Fig. 6B] Fig. 6B is a diagram illustrating an example of a porous carbon sheet in an electrochemical hydrogen pump in a variation of Embodiment 3.
[Fig. 7A] Fig. 7A is a diagram illustrating an example of a porous carbon sheet in an electrochemical hydrogen pump in Embodiment 4.
[Fig. 7B] Fig. 7B is a diagram illustrating an example of a porous carbon sheet in an electrochemical hydrogen pump in a variation of Embodiment 4.

### Description of Embodiments

PTL 1 and 2 do not discuss the issue of the closure of flow channels (hereinafter flooding) by water at power feeders made of porous material.

Here, when an electric current flows between an anode and a cathode in an electrochemical hydrogen pump, for example, protons move from the anode to the cathode through an electrolyte membrane, accompanying water. If the operating temperature of the electrochemical hydrogen pump is equal to or higher than a particular temperature, the water that has moved from the anode to the cathode (electroosmotic water) is present as steam. However, as the hydrogen gas pressure at the cathode becomes higher, the percentage of liquid water increases. If liquid water is present in a cathode, part of the liquid water is pushed back to the anode because of a differential pressure between the cathode and the anode. The amount of water pushed back to the anode increases with rising hydrogen gas pressure at the cathode, which means flooding becomes more likely to occur at an anode gas diffusion layer of the anode as the hydrogen gas pressure at the cathode increases. Once such an event of flooding interferes with gas diffusion at an anode, the electrochemical hydrogen pump can be less efficient in pressurizing hydrogen because of increased diffusion resistance of the electrochemical hydrogen pump.

As a solution to this, an electrochemical hydrogen pump in a first aspect of the present disclosure is a device that includes: an electrolyte membrane; an anode catalyst layer in contact with one primary surface of the electrolyte membrane; a cathode catalyst layer in contact with the other primary surface of the electrolyte membrane; an anode gas diffusion layer in contact with the anode catalyst layer; a cathode gas diffusion layer in contact with the cathode catalyst layer; and a voltage applicator that applies a voltage between the anode catalyst layer and the cathode catalyst layer. The electrochemical hydrogen pump is configured to, through application of the voltage by the voltage applicator, cause hydrogen in a hydrogen-containing gas supplied to above the anode catalyst layer to move above the cathode catalyst layer and to be pressurized. The anode gas diffusion layer includes a porous carbon sheet that has a smaller porosity in a first surface layer, which is on an anode catalyst layer side, than in an inside layer deeper than the first surface layer.

Here, an electrochemical hydrogen pump in a second aspect of the present disclosure is, for example: in the electrochemical hydrogen pump in the first aspect, the porous carbon sheet may have a higher density in the first surface layer than in the inside layer deeper than the first surface layer.

An electrochemical hydrogen pump in a third aspect of the present disclosure is, for example: in the electrochemical hydrogen pump in the first aspect, the porous carbon sheet may have a higher density in a second surface layer, opposite the first surface layer, than in an inside layer deeper than the second surface layer.

An electrochemical hydrogen pump in a fourth aspect of the present disclosure is, for example: in the electrochemical hydrogen pump in the first or second aspect, the porous carbon sheet may have a smaller carbon particle diameter in the first surface layer than in the inside layer deeper than the first surface layer.

An electrochemical hydrogen pump in a fifth aspect of the present disclosure is, for example: in the electrochemical hydrogen pump in the first or third aspect, the porous carbon sheet may have a smaller carbon particle diameter in a second surface layer, opposite the first surface layer, than in an inside layer deeper than the second surface layer.

In this configuration, the electrochemical hydrogen pump in this aspect can be less prone to water flooding at its anode gas diffusion layer than in the related art.

Specifically, the porous carbon sheet has a smaller porosity in its first surface layer, which is on the anode catalyst layer side, and this helps limit water penetration through the first surface layer even if water is pushed back to the anode because of a differential pressure between the cathode and the anode. Besides this, the porous carbon sheet has a larger porosity in an inside layer deeper than its first surface layer, and this ensures water present inside the porous carbon sheet is easily drained from the porous carbon sheet, for example on a stream of anode gas through the porous carbon sheet.

The electrochemical hydrogen pump in this aspect, therefore, is not prone to water flooding at the anode gas diffusion layer and, as a result, maintains adequate gas diffusion at the anode.

Additionally, in the above configuration, the electrochemical hydrogen pump in this aspect suffers only a limited extent of deformation of the anode gas diffusion layer even if a differential pressure (high pressure) occurs between the cathode and the anode while the pump is operating to pressurize hydrogen.

Specifically, if a porous carbon sheet is, for example, a sintered material made from carbon particles (sintered carbon powder), necking (bonding together of particles) between the carbon particles forming the porous carbon sheet increases as the porosity of the porous carbon sheet becomes lower. In other words, as the density of a porous carbon sheet becomes higher, necking (bonding together of particles) between the carbon particles forming the porous carbon sheet increases. Thus the rigidity of the porous carbon sheet improves.

By virtue of this, the electrochemical hydrogen pump in this aspect achieves improved rigidity in any one or both of the first and second surface layers. As a result, the anode gas diffusion layer deforms only to a limited extent even under the differential pressure that occurs between the cathode and the anode while the electrochemical hydrogen pump is operating to pressurize hydrogen. For example, the electrochemical hydrogen pump in this aspect is at a reduced risk of the buckling of the anode gas diffusion layer into a flow channel in an anode separator under such a differential pressure.

An electrochemical hydrogen pump in a sixth aspect of the present disclosure is: in the electrochemical hydrogen pump in any of the first to fifth aspects, the first surface layer of the porous carbon sheet may have a peak pore diameter smaller than the thickness of the electrolyte membrane.

If the peak pore diameter of the first surface layer were equal to or larger than the thickness of the electrolyte membrane, the electrolyte membrane could fall into a pore in the first surface layer and break because of the differential pressure that occurs between the cathode and the anode while the electrochemical hydrogen pump is operating to pressurize hydrogen. The electrochemical hydrogen pump in this aspect, however, is at a reduced risk of such an event by virtue of the peak pore diameter of the first surface layer being smaller than the thickness of the electrolyte membrane.

An electrochemical hydrogen pump in a seventh aspect of the present disclosure is: in the electrochemical hydrogen pump in any one of the first to fifth aspects, the porous carbon sheet may have a porosity of 20% or more in the first surface layer.

An electrochemical hydrogen pump in an eighth aspect of the present disclosure is: in the electrochemical hydrogen pump in the seventh aspect, the porous carbon sheet may have a porosity of 20% or more in a second surface layer, opposite the first surface layer.

If the porosity of the first and second surface layers were less than 20%, gas diffusion from the porous carbon sheet to the anode catalyst layer could be inadequate. The electrochemical hydrogen pump in this aspect, however, can maintain adequate gas diffusion from the porous carbon sheet to the anode catalyst layer because, by virtue of the porosity of the porous carbon sheet being 20% or more, the porous carbon sheet tends to have pores open to the outside (through holes) therein. This helps ensure an adequate supply of anode gas to the anode catalyst layer through the porous carbon sheet.

An electrochemical hydrogen pump in a ninth aspect of the present disclosure is: in the electrochemical hydrogen pump in any one of the first to seventh aspects, the porous carbon sheet may have a porosity of 45% or less in the first surface layer. An electrochemical hydrogen pump in a tenth aspect of the present disclosure is: in the electrochemical hydrogen pump in any one of the first to seventh aspects, the porous carbon sheet may have a porosity of 39% or less in the first surface layer.

An electrochemical hydrogen pump in an eleventh aspect of the present disclosure is: in the electrochemical hydrogen pump in the ninth aspect, the porous carbon sheet may have a porosity of 45% or less in a second surface layer, opposite the first surface layer. An electrochemical hydrogen pump in a twelfth aspect of the present disclosure is: in the electrochemical hydrogen pump in the tenth aspect, the porous carbon sheet may have a porosity of 39% or less a second surface layer, opposite the first surface layer.

In this configuration, the electrochemical hydrogen pump in this aspect has a porous carbon sheet that maintains a desired or higher rigidity by virtue of having a porosity of 45% or less. Thus, when the porous carbon sheet is placed under a desired compressive strength (e.g., 20 MPa) acting in the direction of thickness, the anode gas diffusion layer deforms only to a limited extent even under the differential pressure (high pressure) that occurs between the cathode and the anode while the electrochemical hydrogen pump is operating to pressurize hydrogen, in comparison with the case in which the porosity of the porous carbon sheet exceeds 45%.

The electrochemical hydrogen pump in this aspect, moreover, has a porous carbon sheet that maintains a desired or higher rigidity by virtue of having a porosity of 39% or less. Thus, when the porous carbon sheet is placed under a desired compressive strength (e.g., 40 MPa) acting in the direction of thickness, the anode gas diffusion layer deforms only to a limited extent even under the differential pressure (high pressure) that occurs between the cathode and the anode while the electrochemical hydrogen pump is operating to pressurize hydrogen, in comparison with the case in which the porosity of the porous carbon sheet exceeds 39%.

As stated, incidentally, as the hydrogen gas pressure at the cathode increases, flooding becomes more likely to occur at the anode gas diffusion layer of the anode because of water pushed back to the anode.

As a solution to this, an electrochemical hydrogen pump in a thirteenth aspect of the present disclosure is: in the electrochemical hydrogen pump in any one of the first to twelfth aspects, the porous carbon sheet may contain a water-repellent layer in the first surface layer. An electrochemical hydrogen pump in a fourteenth aspect of the present disclosure is: in the electrochemical hydrogen pump in any one of the first to twelfth aspects, the porous carbon sheet may contain a water-repellent layer on the first surface layer.

In such a configuration, the electrochemical hydrogen pump in this aspect has a porous carbon sheet that is water-repellent by virtue of the water-repellent layer included in or disposed on its first surface layer. Thus, even if water is pushed back to the anode because of a differential pressure between the cathode and the anode, the water is drained quickly on a stream of anode gas at the water-repellent layer. The electrochemical hydrogen pump in this aspect is therefore not prone to water flooding at the anode gas diffusion layer and, as a result, maintains adequate gas diffusion at the anode.

In general, an electrolyte membrane becomes highly conductive to protons under high-temperature and highly humidified conditions (e.g., approximately 60°C). Under such conditions, therefore, an electrochemical hydrogen pump improves in efficiency in pressurizing hydrogen. As stated, when an electric current flows between an anode and a cathode in an electrochemical hydrogen pump, protons move from the anode to the cathode through an electrolyte membrane, accompanying water. Part of the electroosmotic water, the water that has moved from the anode to the cathode, is drained from the cathode together with high-pressure hydrogen gas.

Here, when the density of the electric current that flows between the anode and the cathode is large, an increased amount of electroosmotic water is produced; therefore, an increased amount of electroosmotic water is drained from the cathode. In that case, the electrolyte membrane in the electrochemical hydrogen pump dries quickly, and this may affect the efficiency of the electrochemical hydrogen pump in pressurizing hydrogen.

As a solution to this, an electrochemical hydrogen pump in a fifteenth aspect of the present disclosure is: in the electrochemical hydrogen pump in any one of the first to fourteenth aspects, the porous carbon sheet may contain a water-retaining layer in a second surface layer, opposite the first surface layer. An electrochemical hydrogen pump in a sixteenth aspect of the present disclosure is: in the electrochemical hydrogen pump in any one of the first to fourteenth aspects, the porous carbon sheet may contain a water-retaining layer on a second surface layer, opposite the first surface layer.

In such a configuration, the electrochemical hydrogen pump in this aspect has a porous carbon sheet that is capable of retaining water by virtue of the water-retaining layer included in or disposed on its second surface layer. This ensures smooth supply of water in the anode gas to the electrolyte membrane through the porous carbon sheet, and the possibility of the drying of the electrolyte membrane in the electrochemical hydrogen pump is reduced.

The following describes embodiments of the present disclosure with reference to the attached drawings. It should be noted that all embodiments are merely illustrations of the above aspects. Information such as shapes, materials, structural elements, and the positions of and connections between the elements is therefore given for illustrative purposes only and is not intended to limit the above aspects unless it is given in a claim. Those elements that are not recited in the independent claims, which represent the most generic concepts of the above aspects, are described as optional. An element may appear in drawings with the same reference sign without repeated description. The drawings illustrate structural elements schematically to help understand and therefore may be inaccurate, for example in shape and relative dimensions.

### (Embodiment 1)

### [Device Configuration]

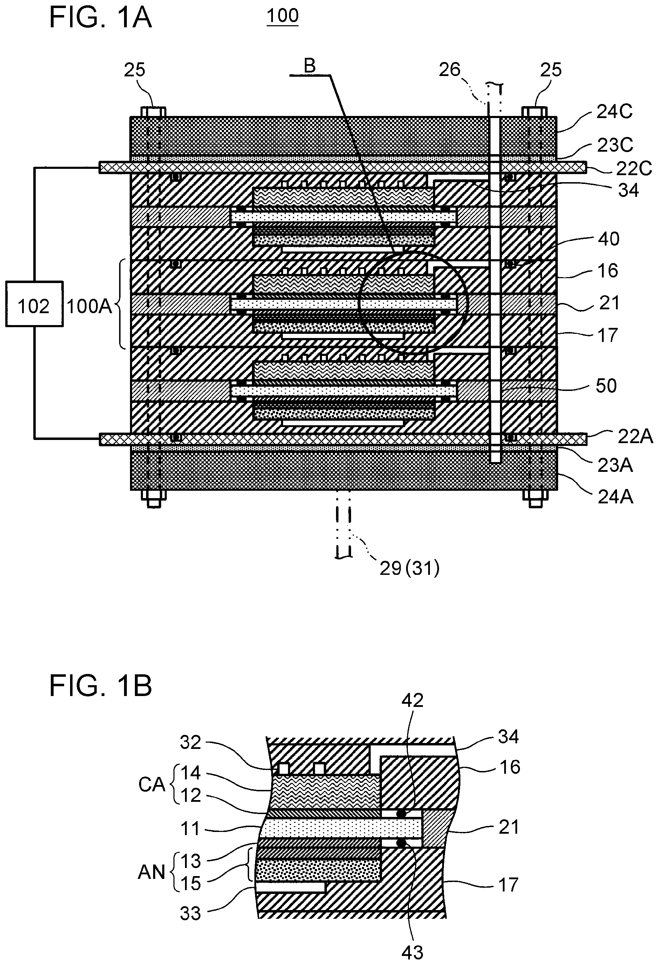

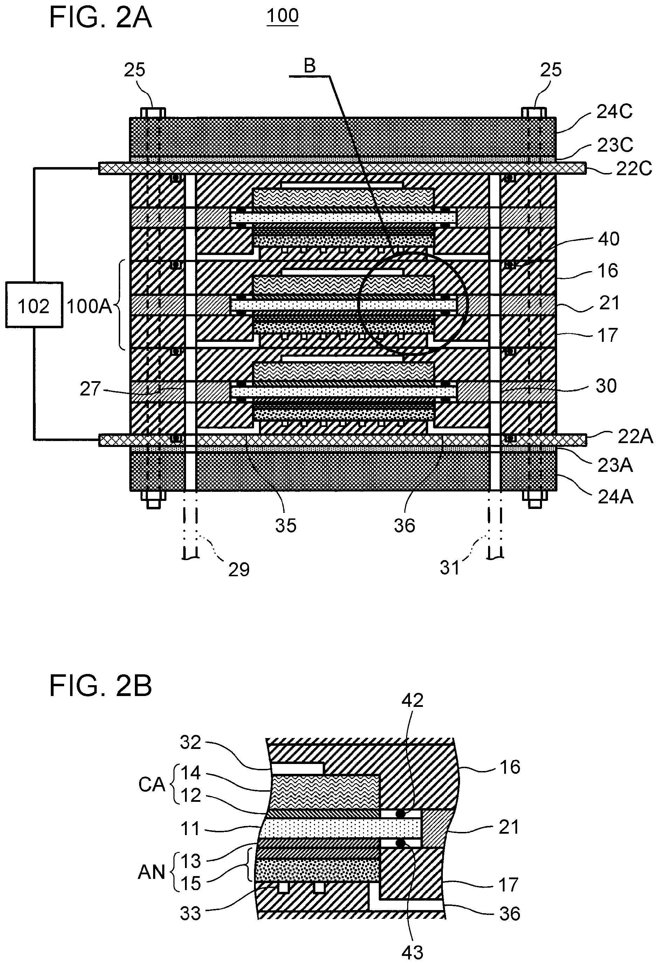

Figs. 1A and 2A are diagrams illustrating an example of an electrochemical hydrogen pump in Embodiment 1. Fig. 1B is an enlarged view of portion B of the electrochemical hydrogen pump in Fig. 1A. Fig. 2B is an enlarged view of portion B of the electrochemical hydrogen pump in Fig. 2A.

Fig. 1A illustrates a vertical section of the electrochemical pump 100 that includes a straight line passing through the center of the electrochemical hydrogen pump 100 and the center of a cathode gas outlet manifold 50 in plan view. Fig. 2A illustrates a vertical section of the electrochemical hydrogen pump 100 that includes a straight line passing through the center of the electrochemical hydrogen pump 100, the center of an anode gas inlet manifold 27, and the center of an anode gas outlet manifold 30 in plan view.

In the example illustrated in Figs. 1A and 2A, the electrochemical hydrogen pump 100 includes at least one hydrogen pump unit 100A.

The electrochemical hydrogen pump 100 contains multiple hydrogen pump units 100A stacked together. For example, in Figs. 1A and 2A, there is a three-tier stack of hydrogen pump units 100A. The number of hydrogen pump units 100A, however, is not critical. The number of hydrogen pump units 100A can be selected as appropriate on the basis of operating conditions, such as the volume of hydrogen to be pressurized by the electrochemical hydrogen pump 100.

A hydrogen pump unit 100A includes an electrolyte membrane 11, an anode AN, a cathode CA, a cathode separator 16, an anode separator 17, and an insulator 21. In a hydrogen pump unit 100A, an electrolyte membrane 11, an anode catalyst layer 13, a cathode catalyst layer 12, an anode gas diffusion layer 15, a cathode gas diffusion layer 14, an anode separator 17, and a cathode separator 16 are stacked together.

The anode AN is on one primary surface of the electrolyte membrane 11. The anode AN is an electrode that includes an anode catalyst layer 13 and an anode gas diffusion layer 15. In plan view, a ring-shaped sealing element 43 surrounds the anode catalyst layer 13. The anode catalyst layer 13 has been sealed properly with the sealing element 43.

The cathode CA is on the other primary surface of the electrolyte membrane 11. The cathode CA is an electrode that includes a cathode catalyst layer 12 and a cathode gas diffusion layer 14. In plan view, a ring-shaped sealing element 42 surrounds the cathode catalyst layer 12. The cathode catalyst layer 12 is sealed properly with the sealing element 42.

The electrolyte membrane 11 is therefore sandwiched between the anode AN and the cathode CA, touching each of the anode catalyst layer 13 and cathode catalyst layer 12. The stack of the cathode CA, electrolyte membrane 11, and anode AN is referred to as a membrane electrode assembly (hereinafter MEA).

The electrolyte membrane 11 conducts protons. The electrolyte membrane 11 can be of any type as long as it conducts protons. Examples of membranes that can be used as the electrolyte membrane 11 include, but are not limited to, a fluoropolymer electrolyte membrane and a hydrocarbon polymer electrolyte membrane. Specifically, the electrolyte membrane 11 can be of, for example, Nafion® (DuPont) or Aciplex® (Asahi Kasei Corporation).

The anode catalyst layer 13 is in contact with one primary surface of the electrolyte membrane 11. The anode catalyst layer 13 contains platinum as a catalyst metal for example, but this is not the only possible choice.

The cathode catalyst layer 12 is in contact with the other primary surface of the electrolyte membrane 11. The cathode catalyst layer 12 contains platinum as a catalyst metal for example, but this is not the only possible choice.

Examples of catalyst carriers that can be used in the cathode catalyst layer 12 and anode catalyst layer 13 include, but are not limited to, carbon particles, for example of carbon black or graphite, and electrically conductive oxide particles.

In the cathode catalyst layer 12 and anode catalyst layer 13, fine particles of catalyst metal are held on a catalyst carrier in a highly dispersed state. Usually, these cathode catalyst layer 12 and anode catalyst layer 13 contain a proton-conductive ionomer component added to expand the field for the electrode reaction.

The cathode gas diffusion layer 14 is in contact with the cathode catalyst layer 12. The cathode gas diffusion layer 14, made of porous material, is electrically conductive, and gases can diffuse therethrough. Desirably, the cathode gas diffusion layer 14 is elastic enough that it will properly follow the displacement and deformation of the structural elements of the electrochemical hydrogen pump 100 caused by a differential pressure between the cathode CA and the anode AN while the pump is operating. In the electrochemical hydrogen pump 100 in this embodiment, the cathode gas diffusion layer 14 is an element made of carbon fiber. For example, it may be a porous carbon fiber sheet, for example of carbon paper, carbon cloth, or carbon felt. The base material for the cathode gas diffusion layer 14, however, does not need to be a carbon fiber sheet. For example, the base material for the cathode gas diffusion layer 14 may be sintered metal fibers, for example made from titanium, a titanium alloy, or stainless steel, sintered metal particles made from any such metal, etc.

The anode gas diffusion layer 15 is in contact with the anode catalyst layer 13. The anode gas diffusion layer 15, made of porous material, is electrically conductive, and gases can diffuse therethrough. Desirably, the anode gas diffusion layer 15 is of high rigidity so that it will limit the displacement and deformation of the structural elements of the electrochemical hydrogen pump 100 caused by a differential pressure between the cathode CA and the anode AN while the pump is operating.

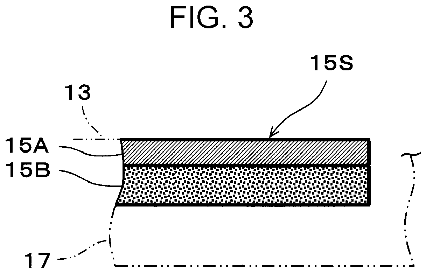

Here, the anode gas diffusion layer 15 includes, as illustrated in Fig. 3, a porous carbon sheet 15S that has a smaller porosity in a first surface layer 15A, which is on the anode catalyst layer 13 side, than in an inside layer 15B deeper than the first surface layer 15A (the layer on the anode separator 17 side in the illustrated example). In other words, the porous carbon sheet 15S has a higher density in the first surface layer 15A than in the inside layer 15B deeper than the first surface layer 15A.

Such a porous carbon sheet 15S may have, for example, a smaller carbon particle diameter in the first surface layer 15A than in the inside layer 15B deeper than the first surface layer 15A. This helps ensure the porosity of the first surface layer 15A is smaller than that of the inside layer 15B deeper than the first surface layer 15A.

The porous carbon sheet 15S can be, for example, a sintered material made from carbon particles.

The relationship between, or the relative magnitudes of, the porosity of the first surface layer 15A and that of the inside layer 15B deeper than the first surface layer 15A in the porous carbon sheet 15S is not necessarily achieved by the relative magnitudes of the carbon particle diameters in these layers. For example, a first surface layer 15A formed as an MPL containing carbon particles and resin has a smaller porosity than the inside layer 15B deeper than the first surface layer 15A even if the carbon particle diameter is equal between the first surface layer 15A and the inside layer 15B deeper than the first surface layer 15A.

The carbon particle diameters, pore diameters, and porosities in the porous carbon sheet 15S can be measured using a CT (Computed Tomography) scanner capable of producing cross-sectional X-ray CT scans of the porous carbon sheet 15S (trade name, Xradia 520 Versa; Zeiss). That is, irradiating a sample with X-rays and observing the transmission image provides knowledge of the internal structure of the sample. By doing this while rotating and moving the sample and then combining the observed series of transmission images of the sample, one can obtain a three-dimensional reconstitution image of the sample, with which the sample's internal three-dimensional structure, from the nanometer level to the millimeter level, can be observed and quantitatively analyzed. An image obtained in such a way can be used to measure the carbon particle diameters, pore diameters, and porosities in the porous carbon sheet 15S.

Alternatively, the carbon particle diameters, pore diameters, and porosities in the porous carbon sheet 15S can be measured using a device capable of SEM (Scanning Electron Microscope) observation of a polished cross-section of the porous carbon sheet 15S (trade name, JSM-7900F; JEOL, Ltd.).

Here, the pore diameters and porosities in the porous carbon sheet 15S can be measured by a method other than the aforementioned cross-sectional X-ray CT and SEM observation. Such pore diameters and porosities can alternatively be determined using, for example, a mercury porosimeter (trade name, AutoPore III 9410; Shimadzu Corporation). This device measures the volume of pores having a diameter of several nm to approximately 500 µm on the basis of pressure intrusion of mercury into the pores. The pore volume and the solid portion in each of the first surface layer 15A and the inside layer 15B deeper than the first surface layer 15A provide knowledge of the porosities in these layers.

It should be noted that these measuring instruments are mentioned for illustrative purposes and are not the only possible choices. These measuring instruments may be used on an as-needed basis, for example depending on the pore diameter of the porous carbon sheet 15S.

In the electrochemical hydrogen pump 100 in this embodiment, the porous carbon sheet 15S may be a stack in which, as illustrated in Fig. 3, one primary surface of the inside layer 15B deeper than the first surface layer 15A is in contact with a primary surface of the anode separator 17, and the other primary surface of the inside layer 15B deeper than the first surface layer 15A is in contact with one primary surface of the first surface layer 15A. The other primary surface of the first surface layer 15A may be in contact with the anode catalyst layer 13.

In the electrochemical hydrogen pump 100 in this embodiment, furthermore, the thickness t of the first surface layer 15A is selected in relation to the total thickness T of the porous carbon sheet 15S with the following relationship: 0 < t/T < 1.

In this setting, the thickness of the inside layer 15B deeper than the first surface layer 15A may be (T - t) as illustrated in Fig. 3. There may be an intermediate layer containing carbon particles (not illustrated) between the first surface layer 15A and the inside layer 15B deeper than the first surface layer 15A, and/or there may be a second surface layer on the side opposite the first surface layer 15A. The detailed configuration in the latter case will be described in Embodiment 2.

The anode separator 17 is an element disposed on the anode AN. The cathode separator 16 is an element disposed on the cathode CA. The cathode separator 16 and anode separator 17 each have a recess in their middle. Each of these recesses contains the cathode gas diffusion layer 14 and anode gas diffusion layer 15, respectively.

In such a way, an MEA as described above is sandwiched between a cathode separator 16 and an anode separator 17, forming a hydrogen pump unit 100A.

The cathode separator 16 has a cathode gas flow channel 32, for example a serpentine one that includes multiple U-shaped turns and multiple straight stretches in plan view, in its primary surface touching the cathode gas diffusion layer 14. The straight stretches of the cathode gas flow channel 32 extend perpendicular to the plane of the page of Fig. 1A. Such a cathode gas flow channel 32, however, is merely an example and is not the only possible choice. For example, the cathode gas flow channel may be formed by multiple linear passages.

The anode separator 17 has an anode gas flow channel 33, for example a serpentine one that includes multiple U-shaped turns and multiple straight stretches in plan view, in its primary surface touching the anode gas diffusion layer 15. The straight stretches of the anode gas flow channel 33 extend perpendicular to the plane of the page of Fig. 2A. Such an anode gas flow channel 33, however, is merely an example and is not the only possible choice. For example, the anode gas flow channel may be formed by multiple linear passages.

Between the electrically conductive cathode separator 16 and anode separator 17 is a ring-shaped flat-plate insulator 21 surrounding the MEA. This prevents short-circuiting between the cathode separator 16 and the anode separator 17.

Here, the electrochemical hydrogen pump 100 includes first and second end plates, which are at the ends, in the direction of stacking, of the stack of hydrogen pump units 100A. Fasteners 25 are also included, fastening the hydrogen pump units 100A, first end plate, and second end plate together in the direction of stacking.

In the example illustrated in Figs. 1A and 2A, the cathode end plate 24C and anode end plate 24A each correspond to each of the first and second end plates. That is, the anode end plate 24A is an end plate disposed on the anode separator 17 located at a first end in the direction of stacking of the components of the hydrogen pump units 100A. The cathode end plate 24C is an end plate disposed on the cathode separator 16 located at a second end in the direction of stacking of the components of the hydrogen pump units 100A.

The fasteners 25 can be of any type as long as they can fasten the hydrogen pump units 100A, cathode end plate 24C, and anode end plate 24A together in the direction of stacking.

For example, the fasteners 25 can be bolts and nuts with a disk spring or a similar tool.

In that case, the bolts as a component of the fasteners 25 may be made to penetrate only through the anode end plate 24A and cathode end plate 24C. In the electrochemical hydrogen pump 100 in this embodiment, however, the bolts penetrate through the components of the three-tier stack of hydrogen pump units 100A, a cathode feed plate 22C, a cathode insulating plate 23C, an anode feed plate 22A, an anode insulating plate 23A, the anode end plate 24A, and the cathode end plate 24C. In this state, the hydrogen pump units 100A are under a desired fastening pressure applied by the fasteners 25, with an end face of the cathode separator 16 at the second end in the aforementioned direction of stacking and an end face of the anode separator 17 at the first end in the aforementioned direction of stacking each sandwiched between each of the cathode end plate 24C and anode end plate 24A with each of the cathode feed plate 22C, cathode insulating plate 23C, anode feed plate 22A, and anode insulating plate 23A interposed therebetween.

In the electrochemical hydrogen pump 100 in this embodiment, therefore, the three-tier stack of hydrogen pump units 100A is maintained in its proper stacked state in the aforementioned direction of stacking by virtue of the fastening pressure applied by the fasteners 25. Furthermore, since the bolts as a component of the fasteners 25 penetrate through the components of the electrochemical hydrogen pump 100, in-plane movement of these components is restricted adequately.

Here, in the electrochemical hydrogen pump 100 in this embodiment, cathode gas flow channels 32 communicate with each other as passages through which cathode gas coming out of the cathode gas diffusion layer 14 of each hydrogen pump unit 100A flows. The following describes how the cathode gas flow channels 32 communicate with each other with reference to drawings.

First, as illustrated in Fig. 1A, the cathode gas outlet manifold 50 has been built as a combination of through holes created through the components of the three-tier stack of hydrogen pump units 100A and the cathode end plate 24C and a blind hole in the anode end plate 24A. The cathode end plate 24C also has a cathode gas outlet line 26. The cathode gas outlet line 26 may be a pipe through which hydrogen (H₂) discharged from the cathode CA flows. The cathode gas outlet line 26 communicates with the cathode gas outlet manifold 50.

The cathode gas outlet manifold 50, furthermore, communicates with one end of the cathode gas flow channel 32 of each hydrogen pump unit 100A via each of cathode gas conduits 34. This ensures streams of hydrogen that have passed through the cathode gas flow channel 32 and cathode gas conduit 34 of the hydrogen pump units 100A join together at the cathode gas outlet manifold 50. The combined stream of hydrogen is then guided to the cathode gas outlet line 26.

In such a way, the cathode gas flow channel 32 of each hydrogen pump unit 100A communicates with the others via the cathode gas conduit 34 of each hydrogen pump unit 100A and the cathode gas outlet manifold 50.

Between a cathode separator 16 and an anode separator 17, between a cathode separator 16 and the cathode feed plate 22C, and between an anode separator 17 and the anode feed plate 22A are ring-shaped sealing elements 40, such as O-rings, surrounding the cathode gas outlet manifold 50 in plan view. The cathode gas outlet manifold 50 has been sealed properly with these sealing elements 40.

As illustrated in Fig. 2A, the anode end plate 24A has an anode gas inlet line 29. The anode gas inlet line 29 may be a pipe through which anode gas to be supplied to the anode AN flows. An example of such an anode gas is hydrogen-containing gases including steam. The anode gas inlet line 29 communicates with a tubular anode gas inlet manifold 27. The anode gas inlet manifold 27 has been built as a combination of through holes created through the components of the three-tier stack of hydrogen pump units 100A and the anode end plate 24A.

The anode gas inlet manifold 27, furthermore, communicates with a first end of the anode gas flow channel 33 of each hydrogen pump unit 100A via each of first anode gas conduits 35. This ensures anode gas supplied from the anode gas inlet line 29 to the anode gas inlet manifold 27 is distributed to each hydrogen pump unit 100A through the first anode gas conduit 35 of each hydrogen pump unit 100A. While the distributed anode gas passes through the anode gas flow channel 33, the anode gas is supplied from the anode gas diffusion layer 15 to the anode catalyst layer 13.

As illustrated in Fig. 2A, the anode end plate 24A also has an anode gas outlet line 31. The anode gas outlet line 31 may be a pipe through which anode gas discharged from the anode AN flows. The anode gas outlet line 31 communicates with a tubular anode gas outlet manifold 30. The anode gas outlet manifold 30 has been built as a combination of through holes created through the components of the three-tier stack of hydrogen pump units 100A and the anode end plate 24A.

The anode gas outlet manifold 30, furthermore, communicates with a second end of the anode gas flow channel 33 of each hydrogen pump unit 100A via each of second anode gas conduits 36. This ensures streams of anode gas that have passed through the anode gas flow channel 33 of the hydrogen pump units 100A are supplied to the anode gas outlet manifold 30 through each second anode gas conduit 36 and join together there. The combined stream of anode gas is then guided to the anode gas outlet line 31.

Between a cathode separator 16 and an anode separator 17, between a cathode separator 16 and the cathode feed plate 22C, and between an anode separator 17 and the anode feed plate 22A are ring-shaped sealing elements 40, such as O-rings, surrounding the anode gas inlet manifold 27 and anode gas outlet manifold 30 in plan view. The anode gas inlet manifold 27 and anode gas outlet manifold 30 have been sealed properly with the sealing elements 40.

As illustrated in Figs. 1A and 2A, the electrochemical hydrogen pump 100 includes a voltage applicator 102.

The voltage applicator 102 is a device that applies a voltage between the anode catalyst layer 13 and the cathode catalyst layer 12. That is, the electrochemical hydrogen pump 100 is a device that operates through the application of the voltage by the voltage applicator 102, which causes hydrogen in a hydrogen-containing gas supplied to above the anode catalyst layer 13 to move above the cathode catalyst layer 12 and to be pressurized.

Specifically, the high potential of the voltage applicator 102 has been applied to the anode catalyst layer 13, and the low potential of the voltage applicator 102 has been applied to the cathode catalyst layer 12. The voltage applicator 102 can be of any type as long as it can apply a voltage between the anode catalyst layer 13 and the cathode catalyst layer 12. For example, the voltage applicator 102 may be a device that controls a voltage to be applied between the anode catalyst layer 13 and the cathode catalyst layer 12. In that case, the voltage applicator 102 includes a DC-to-DC converter if it is connected to a direct-current power supply, such as a battery, a solar cell, or a fuel cell, or includes an AC-to-DC converter if it is connected to an alternating-current power supply, such as mains electricity.

Alternatively, the voltage applicator 102 may be, for example, a multi-range power supply, which controls the voltage it applies between the anode catalyst layer 13 and the cathode catalyst layer 12 and also controls the current to flow between the anode catalyst layer 13 and the cathode catalyst layer 12 so that a preset amount of electricity will be supplied to the hydrogen pump units 100A.

In the example illustrated in Figs. 1A and 2A, the low-potential terminal of the voltage applicator 102 is connected to the cathode feed plate 22C, and the high-potential terminal of the voltage applicator 102 is connected to the anode feed plate 22A. The cathode feed plate 22C is in electrical contact with the cathode separator 16 at the second end in the aforementioned direction of stacking, and the anode feed plate 22A is in electrical contact with the anode separator 17 at the first end in the aforementioned direction of stacking.

Although not illustrated, it is also possible to build a hydrogen supply system that includes this electrochemical hydrogen pump 100. Such a hydrogen supply system is equipped as necessary to supply hydrogen.

For example, the hydrogen supply system may include a dew-point controller (e.g., a humidifier) that controls the dew point of the mixture of hydrogen-containing anode gas discharged from the anode AN through the anode gas outlet line 31, which has been heavily humidified, and hydrogen-containing anode gas supplied from an external hydrogen source through the anode gas inlet line 29, which has been only slightly humidified. In that case, the hydrogen-containing anode gas from an external hydrogen source may be produced using, for example, a water electrolyzer.

Furthermore, the hydrogen supply system may include, for example, a temperature sensor that detects the temperature of the electrochemical hydrogen pump 100, a hydrogen reservoir that provides a temporary storage for hydrogen discharged from the cathodes CA in the electrochemical hydrogen pump 100, and a pressure sensor that detects the pressure of hydrogen gas in the hydrogen reservoir.

It should be understood that the above-described configuration of an electrochemical hydrogen pump 100 and various equipment, not illustrated, for a hydrogen supply system are merely examples and are not the only possible choices.

For example, the dead-end structure may be used, in which the anode gas outlet manifold 30 and anode gas outlet line 31 are omitted, and hydrogen in the anode gas supplied to the anode AN through the anode gas inlet manifold 27 is all pressurized at the cathode CA.

### [Operation]

The following describes an example of how the electrochemical hydrogen pump 100 pressurizes hydrogen with reference to drawings.

This operation may be performed through, for example, the reading of a control program in a memory of a controller, not illustrated, by a processor of the controller. This operation, however, does not always need to be done by a controller. Part of the operation may be performed by the operator. The following describes a case in which the anode gas to be supplied to the anodes AN in the electrochemical hydrogen pump 100 is hydrogen-containing gases including steam.

First, the anodes AN in the electrochemical hydrogen pump 100 are supplied with low-pressure hydrogen-containing gases, and a voltage from the voltage applicator 102 is fed to the electrochemical hydrogen pump 100.

This causes hydrogen molecules to dissociate into hydrogen ions (protons) and electrons through oxidation (formula (1)) at the anode catalyst layer 13 of the anode AN. The protons travel through the inside of the electrolyte membrane 11 to the cathode catalyst layer 12. The electrons travel through the voltage applicator 102 to the cathode catalyst layer 12.

At the cathode catalyst layer 12, hydrogen molecules are regenerated through reduction (formula (2)). As known, while the protons are traveling through the inside of the electrolyte membrane 11, a particular amount of water, called electroosmotic water, moves from the anode AN to the cathode CA together with the protons.

During this, the hydrogen (H₂) produced at the cathode CA can be pressurized by increasing the pressure drop in a hydrogen outlet line using a flow controller, not illustrated. The hydrogen outlet line can be, for example, the cathode gas outlet line 26 in Fig. 2A. The flow controller can be, for example, a back pressure valve or regulator valve fitted to the hydrogen outlet line.

Anode: H₂ (low pressure) → 2H⁺ + 2e⁻ ... (1)

Cathode: 2H⁺ + 2e⁻ → H₂ (high pressure) ... (2)

In such a way, in the electrochemical hydrogen pump 100, the application of the aforementioned voltage by the voltage applicator 102 causes hydrogen in the hydrogen-containing gases supplied to the anode AN to be pressurized at the cathode CA. After this hydrogen pressurization operation of the electrochemical hydrogen pump 100, the hydrogen pressurized at the cathode CA is, for example, stored temporarily in a hydrogen reservoir, not illustrated. The hydrogen stored in the hydrogen reservoir is supplied to a hydrogen consumer when needed. The hydrogen consumer can be, for example, a fuel cell that generates electricity using hydrogen.

Here, when an electric current flows between an anode AN and a cathode CA in an electrochemical hydrogen pump 100, for example, protons move from the anode AN to the cathode CA through an electrolyte membrane 11, accompanying water. If the operating temperature of the electrochemical hydrogen pump 100 is equal to or higher than a particular temperature, the water that has moved from the anode AN to the cathode CA (electroosmotic water) is present as steam. However, as the hydrogen gas pressure at the cathode CA becomes higher, the percentage of liquid water increases. If liquid water is present in a cathode CA, part of the liquid water is pushed back to the anode AN because of a differential pressure between the cathode CA and the anode AN. The amount of water pushed back to the anode AN increases with rising hydrogen gas pressure at the cathode CA, which means flooding becomes more likely to occur at the anode gas diffusion layer 15 of the anode AN because of water pushed back to the anode AN as the hydrogen gas pressure at the cathode CA increases. Once such an event of flooding interferes with gas diffusion at an anode AN, the electrochemical hydrogen pump 100 can be less efficient in pressurizing hydrogen because of increased diffusion resistance of the electrochemical hydrogen pump 100.

As a solution to this, in the electrochemical hydrogen pump 100 in this embodiment, the anode gas diffusion layer 15 includes, as stated, a porous carbon sheet 15S that has a smaller porosity in its first surface layer 15A, which is on the anode catalyst layer 13 side, than in an inside layer 15B, which is on the anode separator 17 side, deeper than the first surface layer 15A. By virtue of this, the electrochemical hydrogen pump 100 in this embodiment can be less prone to water flooding at its anode gas diffusion layer 15 than in the related art.

Specifically, the porous carbon sheet 15S has a smaller porosity in its first surface layer 15A, which is on the anode catalyst layer 13 side, and this helps limit water penetration through the first surface layer 15A even if water is pushed back to the anode AN because of a differential pressure between the cathode CA and the anode AN. Besides this, the porous carbon sheet 15S has a larger porosity in an inside layer 15B, which is on the anode separator 17 side, deeper than the first surface layer 15A, and this ensures water present inside the porous carbon sheet 15S is easily drained from the porous carbon sheet 15S, for example on a stream of anode gas through the porous carbon sheet 15S.

The electrochemical hydrogen pump 100 in this embodiment, therefore, is not prone to water flooding at the anode gas diffusion layer 15 and, as a result, maintains adequate gas diffusion at the anode AN.

Incidentally, a sintered anode gas diffusion layer made from a metal powder, such as a titanium powder, as in the electrochemical hydrogen pump in PTL 1 had sharp spots when observed microscopically.

The porous carbon sheet 15S of the electrochemical hydrogen pump 100 in this embodiment, by contrast, has a relatively small number of sharp spots of the type observed with the known porous piece of metal. Moreover, the spots where carbon particles form sharp points become smaller with decreasing diameter of the carbon particles forming the first surface layer 15A. The electrochemical hydrogen pump 100 in this embodiment is therefore at a reduced risk of damage to the electrolyte membrane 11 even when the porous carbon sheet 15S is pressed by the electrolyte membrane 11, compared with that in PTL 1.

A multilayer body formed by coating sintered metal powder with an MPL containing carbon and resin as in the electrochemical hydrogen pump in PTL 2 suffers weak bonding between the two layers because of the difference in material between the metal powder and the MPL. Such a multilayer body can therefore delaminate into the sintered metal powder and the MPL when exposed to in-plane forces caused by pressure rises and falls in the electrochemical hydrogen pump.

In the electrochemical hydrogen pump 100 in this embodiment, by contrast, the first surface layer 15A and the inside layer 15B deeper than the first surface layer 15A of the porous carbon sheet 15S are sintered materials made from the same kind of carbon particles. The electrochemical hydrogen pump 100 in this embodiment is therefore less prone to delamination between the first surface layer 15A and the inside layer 15B deeper than the first surface layer 15A, compared with that in PTL 2.

In the electrochemical hydrogen pumps in PTL 1 and 2, moreover, the gas diffusion layers are made of metal. Metal gas diffusion layers need to be plated with a noble metal to have corrosion resistance under acidic conditions, and this causes a cost increase. The inventors considered using carbon-based gas diffusion layers as they are resistant to corrosion under acidic conditions and cost less to produce, but found a problem therewith: The anode gas diffusion layer buckles into the anode gas flow channel in the anode separator under the high pressure at the cathode.

To address this, in the electrochemical hydrogen pump 100 in this embodiment, the porous carbon sheet 15S has a smaller porosity in its first surface layer 15A, which is on the anode catalyst layer 13 side, than in an inside layer 15B, which is on the anode separator 17 side, deeper than the first surface layer 15A. In the electrochemical hydrogen pump 100 in this embodiment, therefore, the surface of the first surface layer 15A, a layer more rigid than the inside layer 15B deeper than the first surface layer 15A, serves to support the compressive force produced by a differential pressure between the cathode CA and the anode AN. Specifically, if a porous carbon sheet 15S is a sintered material made from carbon particles, necking (bonding together of particles) between the carbon particles forming the porous carbon sheet 15S increases as the porosity of the porous carbon sheet 15S becomes lower. In other words, as the density of a porous carbon sheet 15S becomes higher, necking (bonding together of particles) between the carbon particles forming the porous carbon sheet 15S increases. Thus the rigidity of the porous carbon sheet 15S improves.

In such a way, the electrochemical hydrogen pump 100 in this embodiment achieves improved rigidity in the first surface layer 15A of the porous carbon sheet 15S without compromising adequate gas diffusion in the porous carbon sheet 15S. As a result, the porous carbon sheet 15S deforms only to a limited extent even under the differential pressure that occurs between the cathode CA and the anode AN while the electrochemical hydrogen pump 100 is operating to pressurize hydrogen. For example, the electrochemical hydrogen pump 100 in this embodiment is at a reduced risk of the buckling of the porous carbon sheet 15S into the anode gas flow channel 33 in the anode separator 17 under such a differential pressure.

### (Embodiment 2)

An electrochemical hydrogen pump 100 in Embodiment 2 is the same as the electrochemical hydrogen pump 100 in Embodiment 1 except for the structure of the porous carbon sheet 15S, which is described below.

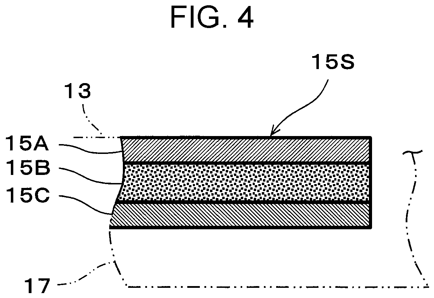

Fig. 4 is a diagram illustrating an example of a porous carbon sheet in an electrochemical hydrogen pump in Embodiment 2.

In the electrochemical hydrogen pump 100 in this embodiment, the porous carbon sheet 15S has a higher density in its second surface layer 15C, opposite the first surface layer 15A, than in an inside layer 15B deeper than the second surface layer 15C. Such a porous carbon sheet 15S may have, for example, a smaller carbon particle diameter in the second surface layer 15C than in the inside layer 15B deeper than the second surface layer 15C.

Here, in the electrochemical hydrogen pump 100 in this embodiment, as illustrated in Fig. 4, the porous carbon sheet 15S has a first surface layer 15A, which is on the anode catalyst layer 13 side, and a second surface layer 13C, which is on the anode separator 17 side. The inside layer 15B deeper than the first surface layer 15A and second surface layer 15C is an intermediate layer, positioned in the middle of the porous carbon sheet 15S in the direction of thickness. If the porous carbon sheet 15S is, for example, a sintered material made from carbon particles, the porosity of the first surface layer 15A and that of the second surface layer 15C may be smaller than that of this intermediate layer.

In this configuration, the electrochemical hydrogen pump 100 in this embodiment is such that the surface of the second surface layer 15C, a layer more rigid than the inside layer 15B deeper than the second surface layer 15C, serves to support the compressive force produced by a differential pressure between the cathode CA and the anode AN. Specifically, if a porous carbon sheet 15S is a sintered material made from carbon particles, necking (bonding together of particles) between the carbon particles forming the porous carbon sheet 15S increases as the porosity of the porous carbon sheet 15S becomes lower. In other words, as the density of a porous carbon sheet 15S becomes higher, necking (bonding together of particles) between the carbon particles forming the porous carbon sheet 15S increases. Thus the rigidity of the porous carbon sheet 15S improves.

In such a way, the electrochemical hydrogen pump 100 in this embodiment achieves improved rigidity in the second surface layer 15C of the porous carbon sheet 15S without compromising adequate gas diffusion in the porous carbon sheet 15S. As a result, the porous carbon sheet 15S deforms only to a limited extent even under the differential pressure that occurs between the cathode CA and the anode AN while the electrochemical hydrogen pump 100 is operating to pressurize hydrogen. For example, the electrochemical hydrogen pump 100 in this embodiment is at a reduced risk of the buckling of the porous carbon sheet 15S into the anode gas flow channel 33 in the anode separator 17 under such a differential pressure.

Except for the feature described above, the electrochemical hydrogen pump 100 in this embodiment may be the same as the electrochemical hydrogen pump 100 in Embodiment 1.

### (Example 1)

An electrochemical hydrogen pump 100 in Example 1 is the same as the electrochemical hydrogen pump 100 in Embodiment 1 except for the structure of the porous carbon sheet 15S, which is described below.

In the electrochemical hydrogen pump 100 in this example, the first surface layer 15A of the porous carbon sheet 15S has a peak pore diameter smaller than the thickness of the electrolyte membrane 11. The thickness of the electrolyte membrane 11 is, for example, but is not limited to, between approximately 20 µm and approximately 50 µm.

Such a peak pore diameter can be measured using, for example, the various measuring instruments mentioned above.

If the peak pore diameter of the first surface layer 15A were equal to or larger than the thickness of the electrolyte membrane 11, the electrolyte membrane 11 could fall into a pore in the first surface layer 15A and break because of the differential pressure that occurs between the cathode CA and the anode AN while the electrochemical hydrogen pump 100 is operating to pressurize hydrogen. The electrochemical hydrogen pump 100 in this example, however, is at a reduced risk of such an event by virtue of the peak pore diameter of the first surface layer 15A being smaller than the thickness of the electrolyte membrane 11.

Except for the feature described above, the electrochemical hydrogen pump 100 in this example may be the same as the electrochemical hydrogen pump 100 in Embodiment 1 or 2.

### (Example 2)

An electrochemical hydrogen pump 100 in Example 2 is the same as the electrochemical hydrogen pump 100 in Embodiment 2 except for the structure of the porous carbon sheet 15S, which is described below.

First, an example of measured porosities of the porous carbon sheet 15S is described below.

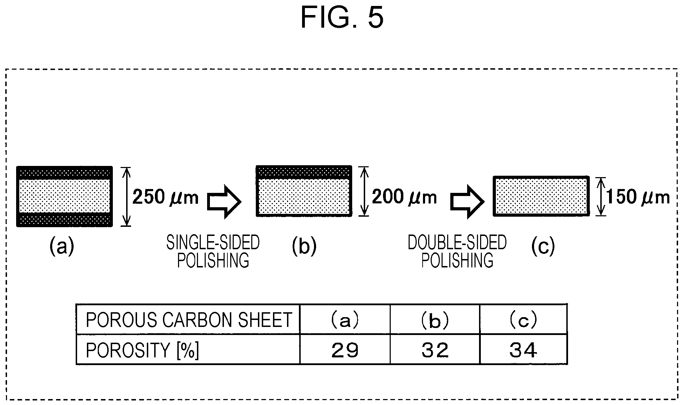

Fig. 5 is a diagram illustrating an example of measured porosities of a porous carbon sheet in an electrochemical hydrogen pump.

First, in Fig. 5 (a), the porosity of an approximately 250-µm thick porous carbon sheet was measured, for example using a mercury porosimeter (trade name, AutoPore III 9410; Shimadzu Corporation). This porosity was approximately 29%.

Then, one primary surface of the porous carbon sheet in Fig. 5 (a) was polished in the direction of thickness to remove approximately 50 µm as illustrated in Fig. 5 (b) (single-sided polishing). In Fig. 5 (b), the porosity of the approximately 200-µm thick porous carbon sheet was measured, for example using a mercury porosimeter (trade name, AutoPore III 9410; Shimadzu Corporation). This porosity was approximately 32%.

Then, the other primary surface of the porous carbon sheet in Fig. 5 (b) was polished in the direction of thickness to remove approximately 50 µm as illustrated in Fig. 5 (c) (double-sided polishing). In Fig. 5 (c), the porosity of the approximately 150-µm thick porous carbon sheet was measured, for example using a mercury porosimeter (trade name, AutoPore III 9410; Shimadzu Corporation). This porosity was approximately 34%.

These measured porosities of a porous carbon sheet indicate the porous carbon sheet in Fig. 5 (a) is a combination of a high-porosity intermediate layer and low-porosity surface layers. That is, the porous carbon sheet in Fig. 5 (a) may be a porous carbon sheet 15S that includes a first surface layer 15A, an inside layer 15B (intermediate layer), and a second surface layer 15C as illustrated in Fig. 4.

It should be noted that if this porous carbon sheet is, for example, a sintered material made from carbon particles, the high-porosity intermediate layer corresponds to a region in which there is a sparse population of carbon particles. The low-porosity surface layers correspond to regions in which there is a dense population of carbon particles.

A porous carbon sheet that has different relative magnitudes of porosities in its intermediate layer and surface layers may be, for example, but is not limited to, a powder compact that has been sintered at a desired temperature and pressure. Such a porous carbon sheet can also be formed by making the diameter of carbon particles in the surface layers smaller than that in the intermediate layer.

Overall, in the electrochemical hydrogen pump 100 in this example, the porous carbon sheet 15S has a porosity of 20% or more in its first surface layer 15A. In the electrochemical hydrogen pump 100 in this example, furthermore, the porous carbon sheet 15S may have a porosity of 20% or more in its first surface layer 15A and second surface layer 15C.

Such porosities can be measured using, for example, the various measuring instruments mentioned above.

If the porosity of the first surface layer 15A and second surface layer 15C were less than 20%, gas diffusion from the porous carbon sheet 15S to the anode catalyst layer 13 could be inadequate. The electrochemical hydrogen pump 100 in this example, however, can maintain adequate gas diffusion from the porous carbon sheet 15S to the anode catalyst layer 13 because, by virtue of the porosity of the porous carbon sheet 15S being 20% or more, the porous carbon sheet 15S tends to have pores open to the outside (through holes) therein. This helps ensure an adequate supply of the anode gas from the anode separator 17 to the anode catalyst layer 13 through the porous carbon sheet 15S.

Except for the feature described above, the electrochemical hydrogen pump 100 in this example may be the same as the electrochemical hydrogen pump 100 in any of Embodiment 1, Embodiment 2, and Example 1 of these embodiments.

### (Example 3)

An electrochemical hydrogen pump 100 in Example 3 is the same as the electrochemical hydrogen pump 100 in Embodiment 2 except for the structure of the porous carbon sheet 15S, which is described below.

First, the porosity of the porous carbon sheet 15S was measured with the porous carbon sheet 15S placed under a compressive strength of 16 MPa or 60 MPa in the direction of thickness. In the former case the porosity was 47%, and in the latter case the porosity was 33%.

These measurements of porosity were done using a mercury porosimeter (trade name, AutoPore III 9410; Shimadzu Corporation).

Here, the compressive strength acting on a porous carbon sheet 15S in the direction of thickness appears to be negatively correlated with the porosity of the porous carbon sheet 15S, with a generally linear relationship therebetween.

When a linear approximation of the above measurement data is applied to calculate the highest porosity required to limit damage to the porous carbon sheet 15S when the porous carbon sheet 15S is placed under a desired compressive strength (e.g., 20 MPa) acting in the direction of thickness, the calculation yields a result of 45%.

In this case, therefore, it would be good for the porous carbon sheet 15S to have a porosity of 45% or less in its first surface layer 15A, which is on the anode catalyst layer 13 side, in the electrochemical hydrogen pump 100 in this example. If so, the porous carbon sheet 15S may have a porosity of 45% or less in its second surface layer 15C, opposite the first surface layer 15A.

This ensures, in the electrochemical hydrogen pump 100 in this example, the porous carbon sheet 15S maintains a desired or higher rigidity by virtue of having a porosity of 45% or less. Thus, when the porous carbon sheet 15S is placed under a desired compressive strength (e.g., 20 MPa) acting in the direction of thickness, the anode gas diffusion layer 15 deforms only to a limited extent even under the differential pressure (high pressure) that occurs between the cathode CA and the anode AN while the electrochemical hydrogen pump 100 is operating to pressurize hydrogen, in comparison with the case in which the porosity of the porous carbon sheet 15S exceeds 45%. For example, the electrochemical hydrogen pump 100 in this example is at a reduced risk of the buckling of the anode gas diffusion layer 15 into the anode gas flow channel 33 in the anode separator 17 under such a differential pressure.

If the compressive strength acting on the porous carbon sheet 15S in the direction of thickness is somewhere around 20 MPa, an electrochemical hydrogen pump 100 with such a porous carbon sheet 15S has various applications. For example, the electrochemical hydrogen pump 100 can be used when small hydrogen containers to be transported, for example by truck, are loaded with hydrogen at approximately 15 MPa. The electrochemical hydrogen pump 100 can also be used when bundles of hydrogen containers to be transported, for example by truck with or without a crane, are loaded with hydrogen at approximately 15 MPa or approximately 20 MPa.

Furthermore, when a linear approximation of the above measurement data is applied to calculate the highest porosity required to limit damage to the porous carbon sheet 15S when the porous carbon sheet 15S is placed under a desired compressive strength (e.g., 40 MPa) acting in the direction of thickness, the calculation yields a result of 39%.

In this case, therefore, it would be good for the porous carbon sheet 15S to have a porosity of 39% or less in its first surface layer 15A, which is on the anode catalyst layer 13 side, in the electrochemical hydrogen pump 100 in this example. If so, the porous carbon sheet 15S may have a porosity of 39% or less in its second surface layer 15C, opposite the first surface layer 15A.

This ensures, in the electrochemical hydrogen pump 100 in this example, the porous carbon sheet 15S maintains a desired or higher rigidity by virtue of having a porosity of 39% or less. Thus, when the porous carbon sheet 15S is placed under a desired compressive strength (e.g., 40 MPa) acting in the direction of thickness, the anode gas diffusion layer 15 deforms only to a limited extent even under the differential pressure (high pressure) that occurs between the cathode CA and the anode AN while the electrochemical hydrogen pump 100 is operating to pressurize hydrogen, in comparison with the case in which the porosity of the porous carbon sheet 15S exceeds 39%. For example, the electrochemical hydrogen pump 100 in this example is at a reduced risk of the buckling of the anode gas diffusion layer 15 into the anode gas flow channel 33 in the anode separator 17 under such a differential pressure.

If the compressive strength acting on the porous carbon sheet 15S in the direction of thickness is somewhere around 40 MPa, an electrochemical hydrogen pump 100 with such a porous carbon sheet 15S has various applications. For example, the electrochemical hydrogen pump 100 can be used as a hydrogen compressor at hydrogen stations for forklifts or fuel cell vehicles. Specifically, the electrochemical hydrogen pump 100 can be used when high-pressure hydrogen at approximately 40 MPa is supplied to hydrogen accumulators from hydrogen containers filled with hydrogen at approximately 15 MPa.

Except for the feature described above, the electrochemical hydrogen pump 100 in this example may be the same as the electrochemical hydrogen pump 100 in any of Embodiment 1, Embodiment 2, and Examples 1 and 2 of these embodiments.

### (Embodiment 3)

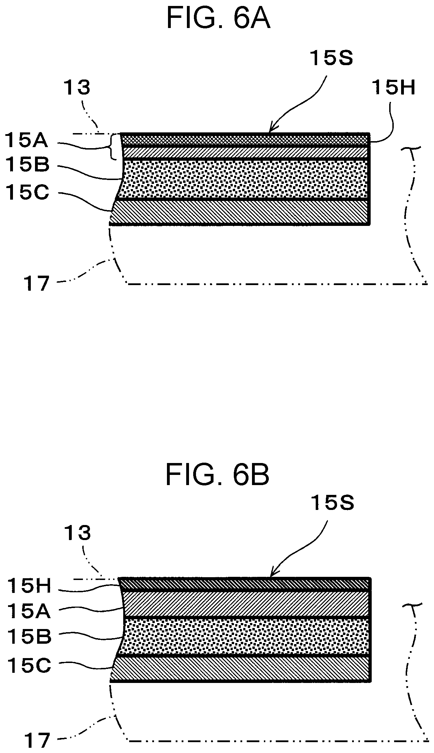

Fig. 6A is a diagram illustrating an example of a porous carbon sheet in an electrochemical hydrogen pump in Embodiment 3.

The porous carbon sheet 15S of the electrochemical hydrogen pump 100 in Embodiment 3 is the same as in the electrochemical hydrogen pump 100 in Embodiment 2 except that the first surface layer 15A includes a water-repellent layer 15H.

As stated, as the hydrogen gas pressure at the cathode CA increases, flooding becomes more likely to occur at the anode gas diffusion layer 15 of the anode AN because of water pushed back to the anode AN.

As a solution to this, in the electrochemical hydrogen pump 100 in this embodiment, the porous carbon sheet 15S is water-repellent by virtue of the water-repellent layer 15H included in its first surface layer 15A. For example, if the first surface layer 15A of the porous carbon sheet 15S is a sintered material made from carbon particles, the first surface layer 15A of the porous carbon sheet 15S may be formed with a water-repellent layer 15H therein as illustrated in Fig. 6A by impregnating the sintered material with a material containing such a water-repellent resin. This ensures even if water is pushed back to the anode AN because of a differential pressure between the cathode CA and the anode AN, the water is drained quickly on a stream of anode gas at the water-repellent layer 15H. The electrochemical hydrogen pump 100 in this embodiment is therefore not prone to water flooding at the anode gas diffusion layer 15 and, as a result, maintains adequate gas diffusion at the anode AN.

The material containing a water-repellent resin can be, for example, a solution of dispersed fine powder of PTFE in a solvent.

These formation and structure of a water-repellent layer 15H, however, are merely examples and are not the only possible choices.

Except for the feature described above, the electrochemical hydrogen pump 100 in this embodiment may be the same as the electrochemical hydrogen pump 100 in any of Embodiment 1, Embodiment 2, and Examples 1 to 3 of these.

### (Variation)

Fig. 6B is a diagram illustrating an example of a porous carbon sheet in an electrochemical hydrogen pump in a variation of Embodiment 3.

The porous carbon sheet 15S of the electrochemical hydrogen pump 100 in this variation is the same as in the electrochemical hydrogen pump 100 in Embodiment 2 except that it has a water-repellent layer 15H on its first surface layer 15A.

In the electrochemical hydrogen pump 100 in this variation, the porous carbon sheet 15S is water-repellent by virtue of the water-repellent layer 15H disposed on its first surface layer 15A. The formation of a water-repellent layer 15H on the first surface layer 15A as illustrated in Fig. 6B can be done by, for example, applying a material containing a water-repellent resin, such as a fluoropolymer, to the first surface layer 15A. This ensures even if water is pushed back to the anode AN because of a differential pressure between the cathode CA and the anode AN, the water is drained quickly on a stream of anode gas at the water-repellent layer 15H. The electrochemical hydrogen pump 100 in this embodiment is therefore not prone to water flooding at the anode gas diffusion layer 15 and, as a result, maintains adequate gas diffusion at the anode AN.

The material containing a water-repellent resin can be, for example, a solution of dispersed fine powder of PTFE in a solvent. The method for the application of the material containing a water-repellent resin can be, for example, spray coating.

These formation and structure of a water-repellent layer 15H, however, are merely examples and are not the only possible choices.

Except for the feature described above, the electrochemical hydrogen pump 100 in this variation may be the same as the electrochemical hydrogen pump 100 in any of Embodiment 1, Embodiment 2, and Examples 1 to 3 of these embodiments.

### (Embodiment 4)

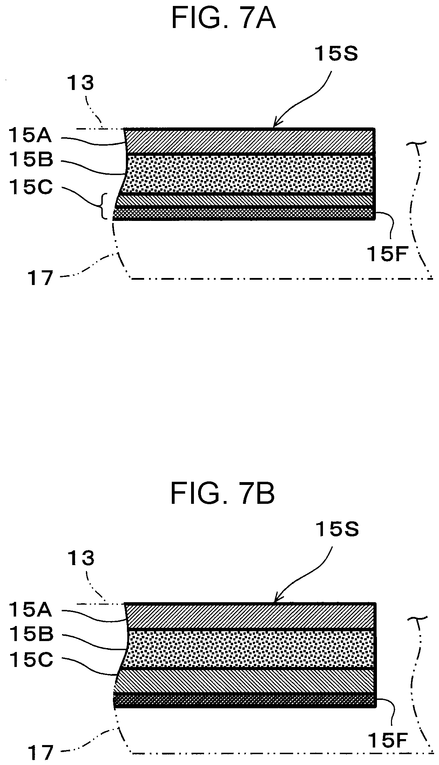

Fig. 7A is a diagram illustrating an example of a porous carbon sheet in an electrochemical hydrogen pump in Embodiment 4.

The porous carbon sheet 15S of the electrochemical hydrogen pump 100 in Embodiment 4 is the same as in the electrochemical hydrogen pump 100 in Embodiment 2 except that the second surface layer 15C, opposite the first surface layer 15A, includes a water-retaining layer 15F.

In general, an electrolyte membrane 11 becomes highly conductive to protons under high-temperature and highly humidified conditions (e.g., approximately 60°C). Under such conditions, therefore, an electrochemical hydrogen pump 100 improves in efficiency in pressurizing hydrogen. As stated, when an electric current flows between an anode AN and a cathode CA in an electrochemical hydrogen pump 100, protons move from the anode AN to the cathode CA through an electrolyte membrane 11, accompanying water. Part of the electroosmotic water, the water that has moved from the anode AN to the cathode CA, is drained from the cathode CA together with high-pressure hydrogen gas.

Here, when the density of the electric current that flows between the anode AN and the cathode CA is large, an increased amount of electroosmotic water is produced; therefore, an increased amount of electroosmotic water is drained from the cathode CA. In that case, the electrolyte membrane 11 in the electrochemical hydrogen pump 100 dries quickly, and this may affect the efficiency of the electrochemical hydrogen pump 100 in pressurizing hydrogen.

As a solution to this, in the electrochemical hydrogen pump 100 in this embodiment, the porous carbon sheet 15S is capable of retaining water by virtue of the water-retaining layer 15F included in its second surface layer 15C. For example, if the second surface layer 15C of the porous carbon sheet 15S is a sintered material made from carbon particles, the second surface layer 15C of the porous carbon sheet 15S may be formed with a water-retaining layer 15F therein as illustrated in Fig. 7A by introducing a hydrophilic functional group, such as the carboxyl, hydroxyl, or carbonyl group, to the carbon particles in the sintered material through treatment, for example with a chemical, electrolytic oxidation, ozone, or oxygen plasma.

The electrochemical hydrogen pump 100 in this embodiment therefore has a porous carbon sheet 15S capable of retaining water, and this ensures smooth supply of water in the anode gas to the electrolyte membrane 11 through the porous carbon sheet 15S. As a result, the possibility of the drying of the electrolyte membranes 11 in the electrochemical hydrogen pump 100 is reduced.

These formation and structure of a water-retaining layer 15F, however, are merely examples and are not the only possible choices.

Except for the feature described above, the electrochemical hydrogen pump 100 in this embodiment may be the same as the electrochemical hydrogen pump 100 in any of Embodiment 1, Embodiment 2, Examples 1 to 3 of these embodiments, Embodiment 3, and the variation of Embodiment 3.

### (Variation)

Fig. 7B is a diagram illustrating an example of a porous carbon sheet in an electrochemical hydrogen pump in a variation of Embodiment 4.

The porous carbon sheet 15S of the electrochemical hydrogen pump 100 in this variation is the same as in the electrochemical hydrogen pump 100 in Embodiment 2 except that it has a water-retaining layer 15F on its second surface layer 15C, opposite the first surface layer 15A.

In the electrochemical hydrogen pump 100 in this variation, the porous carbon sheet 15S is capable of retaining water by virtue of the water-retaining layer 15F disposed on its second surface layer 15C. For example, a water-retaining layer 15F may be placed on the second surface layer 15C as illustrated in Fig. 7B that contains carbon particles to which a hydrophilic functional group, such as the carboxyl, hydroxyl, or carbonyl group, has been introduced through treatment, for example with a chemical, electrolytic oxidation, ozone, or oxygen plasma.

The electrochemical hydrogen pump 100 in this embodiment therefore has a porous carbon sheet 15S capable of retaining water, and this ensures smooth supply of water in the anode gas to the electrolyte membrane 11 through the porous carbon sheet 15S. This helps reduce the possibility of the drying of the electrolyte membranes 11 in the electrochemical hydrogen pump 100.

These formation and structure of a water-retaining layer 15F, however, are merely examples and are not the only possible choices.

Except for the feature described above, the electrochemical hydrogen pump 100 in this variation may be the same as the electrochemical hydrogen pump 100 in any of Embodiment 1, Embodiment 2, and Examples 1 to 3 of these embodiments, Embodiment 3, and the variation of Embodiment 3.

Embodiment 1, Embodiment 2, Examples 1 to 3 of these embodiments, Embodiment 3, the variation of Embodiment 3, Embodiment 4, and the variation of Embodiment 4 may be combined unless mutually exclusive. For example, in an electrochemical hydrogen pump 100, the porous carbon sheet 15S may be given both water repellency as illustrated in Fig. 6A or 6B and water retention properties as illustrated in Fig. 7A or 7B.

From the foregoing description, many improvements to and other embodiments of the present disclosure are apparent to those skilled in the art. The foregoing description should therefore be construed only as an illustration and is provided in order to teach those skilled in the art the best mode of carrying out the present disclosure. The details of the structures and/or functions set forth herein can be substantially changed without departing from the spirit of the present disclosure.

An aspect of the present disclosure is applicable to electrochemical hydrogen pumps that can be less prone to water flooding at their anode gas diffusion layer than in the related art.

### Reference Signs List

- 11:: Electrolyte membrane
- 12:: Cathode catalyst layer
- 13:: Anode catalyst layer
- 14:: Cathode gas diffusion layer
- 15:: Anode gas diffusion layer
- 15A:: First surface layer
- 15B:: Inside layer
- 15C:: Second surface layer
- 15F:: Water-retaining layer
- 15H:: Water-repellent layer
- 15S:: Porous carbon sheet
- 16:: Cathode separator
- 17:: Anode separator
- 21:: Insulator
- 22A:: Anode feed plate
- 22C:: Cathode feed plate
- 23A:: Anode insulating plate
- 23C:: Cathode insulating plate
- 24A:: Anode end plate
- 24C:: Cathode end plate
- 25:: Fastener
- 26:: Cathode gas outlet line
- 27:: Anode gas inlet manifold
- 29:: Anode gas inlet line
- 30:: Anode gas outlet manifold
- 31:: Anode gas outlet line
- 32:: Cathode gas flow channel
- 33:: Anode gas flow channel
- 34:: Cathode gas conduit
- 35:: First anode gas conduit
- 36:: Second anode gas conduit
- 40:: Sealing element
- 42:: Sealing element
- 43:: Sealing element
- 50:: Cathode gas outlet manifold
- 100:: Electrochemical hydrogen pump
- 100A:: Hydrogen pump unit
- 102:: Voltage applicator
- AN:: Anode
- CA:: Cathode

## Claims

1. An electrochemical hydrogen pump comprising:
an electrolyte membrane;
an anode catalyst layer in contact with one primary surface of the electrolyte membrane;
a cathode catalyst layer in contact with the other primary surface of the electrolyte membrane;
an anode gas diffusion layer in contact with the anode catalyst layer;
a cathode gas diffusion layer in contact with the cathode catalyst layer; and
a voltage applicator that applies a voltage between the anode catalyst layer and the cathode catalyst layer, wherein:
the electrochemical hydrogen pump is configured to, through application of the voltage by the voltage applicator, cause hydrogen in a hydrogen-containing gas supplied to above the anode catalyst layer to move above the cathode catalyst layer and to be pressurized, and
the anode gas diffusion layer includes a porous carbon sheet that has a smaller porosity in a first surface layer, which is on an anode catalyst layer side, than in an inside layer deeper than the first surface layer.

2. The electrochemical hydrogen pump according to Claim 1, wherein the porous carbon sheet has a higher density in the first surface layer than in the inside layer deeper than the first surface layer.

3. The electrochemical hydrogen pump according to Claim 1, wherein the porous carbon sheet has a higher density in a second surface layer, opposite the first surface layer, than in an inside layer deeper than the second surface layer.

4. The electrochemical hydrogen pump according to Claim 1 or 2, wherein the porous carbon sheet has a smaller carbon particle diameter in the first surface layer than in the inside layer deeper than the first surface layer.

5. The electrochemical hydrogen pump according to Claim 1 or 3, wherein the porous carbon sheet has a smaller carbon particle diameter in a second surface layer, opposite the first surface layer, than in an inside layer deeper than the second surface layer.

6. The electrochemical hydrogen pump according to any one of Claims 1 to 5, wherein the first surface layer of the porous carbon sheet has a peak pore diameter smaller than a thickness of the electrolyte membrane.

7. The electrochemical hydrogen pump according to any one of Claims 1 to 5, wherein the porous carbon sheet has a porosity of 20% or more in the first surface layer.

8. The electrochemical hydrogen pump according to Claim 7, wherein the porous carbon sheet has a porosity of 20% or more in a second surface layer, opposite the first surface layer.

9. The electrochemical hydrogen pump according to any one of Claims 1 to 7, wherein the porous carbon sheet has a porosity of 45% or less in the first surface layer.

10. The electrochemical hydrogen pump according to any one of Claims 1 to 7, wherein the porous carbon sheet has a porosity of 39% or less in the first surface layer.

11. The electrochemical hydrogen pump according to Claim 9, wherein the porous carbon sheet has a porosity of 45% or less in a second surface layer, opposite the first surface layer.

12. The electrochemical hydrogen pump according to Claim 10, wherein the porous carbon sheet has a porosity of 39% or less a second surface layer, opposite the first surface layer.

13. The electrochemical hydrogen pump according to any one of Claims 1 to 12, wherein the porous carbon sheet contains a water-repellent layer in the first surface layer.

14. The electrochemical hydrogen pump according to any one of Claims 1 to 12, wherein the porous carbon sheet contains a water-repellent layer on the first surface layer.

15. The electrochemical hydrogen pump according to any one of Claims 1 to 14, wherein the porous carbon sheet contains a water-retaining layer in a second surface layer, opposite the first surface layer.

16. The electrochemical hydrogen pump according to any one of Claims 1 to 14, wherein the porous carbon sheet has a water-retaining layer on a second surface layer, opposite the first surface contains.
